Europäisches Patentamt

(19) European Patent Office                    (11) Publication number:          0 186 384

Office européen des brevets                                                B1

(12)                    EUROPEAN PATENT SPECIFICATION

(45) Date of publication of patent specification: 24.05.89          (51) Int. Cl.⁴: **A 01 B 71/06,** A 01 B 59/06

(21) Application number: 85309022.3

(22) Date of filing: 12.12.85

(54) Tractor mountable hitch part and coupling device and attachment mountable hitch part and coupling device and a combination thereof.

(30) Priority: 13.12.84 GB 8431437

(43) Date of publication of application:
02.07.86 Bulletin 86/27

(45) Publication of the grant of the patent:
24.05.89 Bulletin 89/21

(84) Designated Contracting States:
DE FR GB SE

(56) References cited:
WO-A-81/02086
DE-A-2 621 162
FR-A-1 463 146
FR-A-2 196 738
GB-A- 936 708
GB-A-1 088 954
US-A-4 176 727

(73) Proprietor: AGRICULTURAL REQUISITES &
MECHANIZATIONS LTD
Colton Road
Rugeley Staffordshire WS15 3HF (GB)

(72) Inventor: Cooper, David John
Glaemead Colton Road
Rugeley Staffordshire (GB)
Inventor: Cooper, Neville Philip
Blythe Hurst Newton
Admaston Staffs. (GB)

(74) Representative: Pearce, Anthony Richmond
et al
MARKS & CLERK Alpha Tower Suffolk Street
Queensway Birmingham B1 1TT (GB)

Courier Press, Leamington Spa, England.

## Description

This invention relates to hitches and is more particularly concerned with a hitch to enable an attachment to be connected to a tractor or other prime mover (hereinafter referred to simply as "tractor"). More particularly, the hitch is for an attachment having a driven part which is to be operably connected with a power take-off (PTO) shaft of the tractor. The attachment may or may not be provided with ground-engaging wheels.

Agricultural tractors commonly have a so-called three point linkage connected with a hydraulic ram which enables the linkage to be raised and lowered for the purpose of raising and lowering the whole or part of the attachment. It is common practice to provide such a three point linkage with ball joint connections by which it can be secured to the attachment. However, it requires a relatively high degree of expertise to position the tractor correctly relative to the attachment and join the attachment to each of the three points of the linkage. Such an operation is also time-consuming. In order to obviate or mitigate these disadvantages, it is common practice to provide a permanently mounted frame on the three point linkage which resembles the outline of a figure A. With the three point linkage lowered, this so-called A-frame is positioned under a correspondingly recessed A-frame provided on the attachment by appropriate manoeuvering of the tractor into position and then the tractor hydraulics are operated to lift the three point linkage and thus engage the A-frame with the attachment-mounted A-frame. This system is quite convenient for attachments where no connection to the PTO shaft is required. However, in cases where the attachment itself is to be driven from the PTO shaft, it is necessary to make the necessary connection. A number of systems have previously been proposed for docking of a tractor-mounted rotary coupling part and attachment-mounted rotary coupling part using conical guides to assist in docking. However, the positioning of the PTO shaft on the tractor and the positioning of the driven shaft on the attachment can vary quite widely depending upon the type of tractor and the type of attachment. Thus, problems arise in designing a hitch which is suitable for different designs of tractor and attachment where coupling of the PTO shaft on the tractor with a driven shaft on the attachment is required. A number of systems have been developed for this purpose but they tend to be complicated and require manual adjustment of the position of the tractor-mounted coupling part each time an attachment is to be coupled to the tractor. For this purpose, it is known to use a mechanism for raising and lowering the tractor-mounted coupling part upon appropriate rotation of a handle by a driver of the tractor. Such an arrangement requires the expense of an additional mechanism which has to be operated by the driver.

It has been proposed in GB-A-1088954 to provide a tractor mountable hitch part having a hitch frame mounted on the adjustable tractor linkage, and a power take-off shaft which is connected through a universal joint to a shaft assembly suspended from the hitch frame by a pair of springs. This shaft assembly is engageable with a corresponding shaft assembly similarly mounted on an attachment to be drawn and powered by the tractor.

It is an object of the present invention to obviate or mitigate the above disadvantages.

According to one aspect of the present invention, there is provided a tractor-mountable hitch part and coupling device comprising a member adapted to be mounted on a powered linkage on a tractor which can be raised and lowered, said member being engageable with an attachment-mounted hitch member so as to lift the latter when the powered linkage is raised; a rotary coupling part which is arranged to be driven by a drive shaft of the tractor when the device is mounted on the latter in use, said rotary coupling part being adapted to connect with a corresponding rotary coupling part on the attachment; a support upon which the rotary coupling part is rotatably mounted; means mounting the support on said member, said mounting means permitting the support to move freely relative to the member to a limited extent with at least two degrees of freedom; and a guide member associated with the rotary coupling part for engagement with a corresponding guide member on the attachment in order to facilitate mutual engagement of the rotary coupling parts in use; characterised in that the mounting means comprises a pair of slide and roller assemblies which serve to connect the guide member with the member, each assembly being pivotally attached to the guide member and to the member so that one degree of freedom of movement of the guide member and rotary coupling part is permitted by pivoting of the assemblies relative to the members whilst a second degree of freedom of movement of the guide member and rotary coupling part is permitted by relative sliding movement between the slides and the respective rollers.

With the above described device, there is no need to provide any separate drive for raising and lowering the rotary coupling part since the latter can be positioned at the desired level by appropriate operation of the powered linkage, the arrangement being such that the rotary coupling part is engaged with the corresponding rotary coupling part on the attachment before the powered linkage is raised further in order fully to engage and lift the member with the attachment-mounted hitch member.

Conveniently, the guide member takes the form of a flared member to which the support is secured so that the rotary coupling part is mounted in the flared member.

Preferably, the slides are pivotally attached to the guide member and the rollers are pivotally supported on the member such that raising and lowering of the guide member and the rotary coupling part is permitted by pivoting of the rollers relative to the member and pivoting of the slides relative to the guide member, representing one degree of freedom; whilst sliding movement of the slides relative to the rollers permits the guide member and rotary coupling part to be moved laterally of the tractor, representing a second degree of movement of freedom.

Most preferably, the guide member is mounted so as to be tiltable to a limited extent.

Most conveniently, the tractor linkage-mountable member takes the form of a frame having an upper cross bar which is adapted to engage in a correspondingly recessed upper cross bar of the attachment-mounted hitch part.

According to another aspect of the present invention there is provided an attachment-mountable hitch part and coupling device comprising a hitch member which is adapted to be mounted on the attachment and which is adapted to be engaged and lifted by a tractor linkage-mountable member, a support for a rotary coupling part on the attachment for engagement with a rotary coupling part of the tractor-mountable device, and a guide member for engagement with the guide member of the tractor-mountable device, said guide member being adjustable in position with two degrees of freedom relative to the hitch member; and means for locking the guide member relative to the hitch member; characterized in that the attachment-mountable hitch part and coupling device is constructed and adapted to engage with the tractor-mountable hitch part and coupling device according to said one aspect of the present invention.

With the above defined construction, the attachment-mountable hitch part and coupling device is capable of being used on a variety of attachments where the position of the drive shaft of the attachment is not consistent. Thus, the guide member can be positioned in the desired location relative to the hitch member having regard to the position of the drive shaft and then locked in position.

Preferably, the guide member is mounted on a plate having slots therein to permit movement of the guide member relative to the plate and to receive the drive shaft of the attachment; the plate is mounted on the hitch member via slots which extend perpendicularly with respect to the slots in the plate; and the locking means comprises means for locking the guide member against movement relative to the plate and means for locking the plate against movement relative to the hitch member. Conveniently, the hitch member takes the form of a frame having an upper cross member and a pair of spaced depending legs, the arrangement being such that the lower ends of the legs engage against supports on the tractor linkage-mountable member and the cross bar also is adapted to engage a corresponding cross bar on the tractor linkage-mountable member.

According to a further aspect of the present invention, there is provided a combination of tractor-mountable hitch part and coupling device according to said one aspect of the present invention and an attachment-mountable hitch part and coupling device according to said another aspect of the present invention.

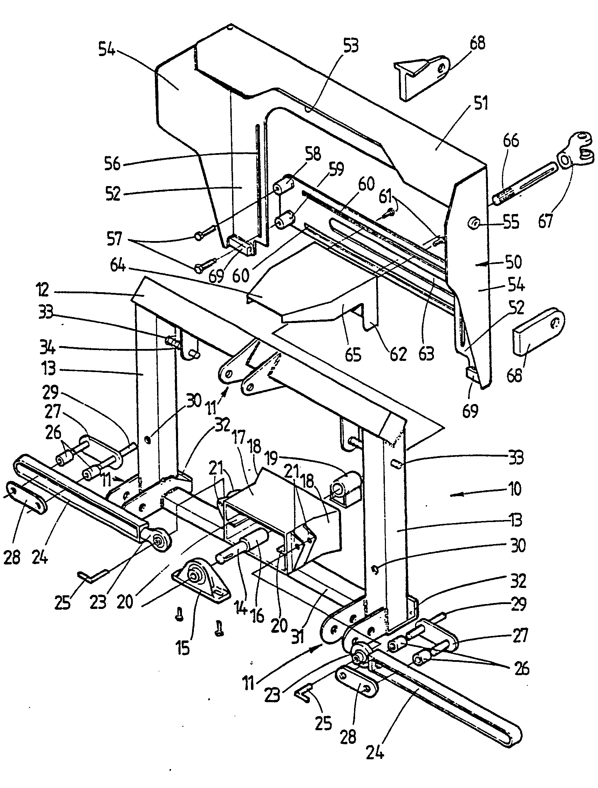

An embodiment of the present invention will now be described, by way of example, with reference to the accompanying drawing which is an exploded perspective view of a tractor-mountable hitch part and coupling device according to said one aspect of the invention and an attachment-mountable hitch part and coupling device according to said another aspect of the present invention.

Referring now to the drawing, the tractor-mountable hitch part and coupling device comprises a member in the form of a rectangular frame 10 which is provided with three pairs of apertured brackets 11 to enable it to be mounted on the usual three-point linkage of a tractor (not shown). In this embodiment, apertured brackets 11 are provided to enable the device to be secured to a standard three point tractor linkage terminating in a ball joint. However, the device can be fitted to a standard three point linkage having hook terminations merely by the provision of appropriate fixing bars extending between the pairs of brackets 11. It will be appreciated that the standard three point linkage of the tractor is hydraulically powered so as to enable the linkage to be raised and lowered. Thus, once the frame 10 has been mounted on the linkage, it can be raised and lowered using the tractor hydraulics. As can be seen from the drawing, one pair of brackets 11 is welded to an upper cross bar 12 of the frame whilst the other two pairs of brackets 11 are welded to lower ends of vertical, rectangular section side tubes 13 of the frame 10.

The tractor-mountable hitch part and coupling device further includes a rotary coupling part 14 which is mounted in a pedestal bearing 15 forming a support for the rotary coupling part 14. The rotary coupling part 14 terminates in an internally splined socket 16. The pedestal bearing 15 and coupling part 14 are mounted within an open ended, rectangular sleeve 17 having flared side walls 18 at an end thereof which faces rearwardly of the tractor in use, Also disposed within the rectangular sleeve 17 is a frusto-conical sleeve 19 which is aligned with the splined socket 16. Secured to the inside of each of the side walls of the rectangular sleeve 17 is a respective rib 20. The ribs 20 run parallel to the upper and lower walls of the rectangular sleeve 17, said upper and lower walls being planar and mutually parallel. A pair of apertured brackets 21 is welded to extend laterally from the external surface of each of the side walls of the sleeve 17. These apertured brackets 21 receive an inner end 23 of a respective slide 24. Each inner end 23 is fitted with a ball joint. A respective pin 25 passes through the apertures in each pair of brackets 21 and through the respective ball joint in the inner end 23 of the slide 24. The pins 25 extend horizontally, thus permitting relative pivotal movement between the sleeve 17 and the slides 24 in a vertical plane which extends transversely across the tractor. Each slide 24 is of elongated U-form thus defining an elongated slot. Disposed in the slot of each slide 24 is a respective pair of rollers 26 mounted on shafts extending from a support plate 27 disposed on one side of the respective slide 24. A keeper plate 28 is disposed on the opposite side of each slide 24 and engages with the shafts upon which the rollers 26 are mounted. The plates 27 and 28 ensure that the rollers 26 are retained within the slot in the respective slide 24 but permit the rollers 26 to move in the slot. An inner one of each pair of shafts upon which the rollers 26 are mounted extends through the support plate 27 to define a support pin 29 which is pivotally engaged in respective aligned apertures 30 in the vertical side tubes 13 of the frame. Suitable retainer means (not shown) are provided for preventing the support pins 29 from becoming accidentally disengaged from the apertures 30 but permitting pivotal movement relative thereto. The support pins 29 and axes of rotation of the rollers 26 are parallel to the axes of the pins 25.

In a modification (not shown), each U-shaped slide 24 is replaced by a slide in the form of a bar of circular cross-section, and each arrangement of rollers 26 and keeper plate is replaced by a pair of aligned hoops anchored to one side of plate 27, through which hoops the slide bar passes, A suitable stop at the outer end of the slide bar prevents accidental disengagement of the bar from the hoops.

It will be appreciated from the above that the above described arrangement enables the rotary coupling part 14 and the rectangular sleeve 17 to be movable freely with two degrees of freedom in a vertical plane which extends transversely of the tractor. One degree of freedom is in the horizontal direction, as permitted by movement of the slides 24 relative to the rollers 26. The other degree of freedom in the vertical plane is in the vertical direction as permitted by relative pivotal movement between the support pins 29 and the apertures 30 and relative pivotal movement between the inner ends 23 of the slide 24 and the rectangular sleeve 17. Such freedom of movement in two degrees is, within limits, unrestrained. Additionally, a limited degree of universal tilting movement of the sleeve 7 and the parts carried therein is permitted as a result of the provision of the ball joints at the inner ends 23 of the slides 24 and as a result of a certain amount of free play in the connections between the rollers 26 and the slides 24. In practice, the rectangular sleeve 17 drops under the action of gravity until its lower surface engages against a lower cross-bar 31 of the frame 10. However, limited tilting movement of the sleeve 17 in a horizontal plane is still permitted. L-shaped brackets 32 are welded to the lower ends of the side bars 13 of the frame 10 so as to project rearwardly of the frame 10 and to define upwardly directed recesses. At the upper end of each side bar 13 there is provided a securing pin 33 which is loaded by a spring 34 so as to be resiliently biassed so as to project laterally outwardly of the respective side bar 13. The pins 33 are connected to an operating cable (not shown) for remote operation.

The attachment-mountable hitch part and coupling device comprises a hitch member defined by a frame 50 having a horizontal upper cross-bar 51 and depending vertical legs 52. The upper cross-bar 51 is of inverted U section except for a cut-out 53 in an intermediate region thereof. A length of angle iron (not shown) is mounted within the cross-bar 51 and receives, in use, the cross-bar 12. The cut-out 53 is provided for accommodating the apertured brackets 11 secured to the cross-bar 12. The vertical legs 52 are provided with side flanges 54 which are mutually inclined so as to be outwardly flared. Each side flange 54 is provided with a respective locating hole 55 (only one shown) for co-operation with the spring loaded pins 33. In an alternative embodiment (not shown), the angle iron within the cross-bar 51 is dispensed with and a pair of locating holes is provided in the upper surface of the cross-bar 51. The cross-bar 12 is of inverted square U-shaped form to engage within the cross-bar 51 and has a pair of locating lugs extending upwardly therefrom for engagement with the locating holes in the cross-bar 51. Each side flange 54 may have a telescopic ground-engaging leg for supporting the device when the latter is not supported by the tractor-mounted hitch part and coupling device.

Each of the vertical legs 52 is provided with an elongate, vertical slot 56 therethrough which receives a pair of fixing bolts 57. Each bolt 57 engages in a respective, internally screw-threaded sleeve 58 at a respective corner of a vertical plate 59. The vertical plate 59 extends between the legs 52 and has a pair of spaced, horizontally extending elongate slots 60 therethrough. Each slot 60 receives a pair of fixing bolts 61 which engage in internally screw-threaded holes (not shown) in a guide member 62. The plate 59 is also provided with a larger width, horizontal elongated slot 63 therethrough which is disposed between the slots 60. The guide member 62 is formed with a forwardly projecting portion terminating in an inwardly tapered end 64. The maximum width of the guide member 62 is marginally less than the distance between the unflared portions of the side walls of the rectangular sleeve 17. As can be seen from the drawing, the forwardly projecting portion of the guide member 62 is provided with side walls 65 which project downwardly for a short distance. In the region of the inwardly tapering end 64, the depth of the side walls 65 reduces. The maximum depth of the side wall 65 is marginally less than the distance between the inner surface of the planar upper wall of the rectangular sleeve 17 and the upper surface of the respective ribs 20 therein. The rectangular sleeve 17 and the guide member 62 are provided to facilitate engagement of a coupling part in the form of a splined end 66 of a jointed rotary shaft 67 of the attachment. The above-described attachment-mountable hitch part is mounted on the attachment using three apertured brackets 68 (only two shown) which are engaged with those portions of the attachment which are normally connected to the three point linkage of the tractor, In practice, the apertured brackets 68 are provided separately from the frame 50 and are welded thereto at locations which correspond to the desired positions having regard to the particular attachment to which the frame 50 is being secured. The plate 59 is vertically positioned so that the slot 63 is at the correct level to receive the splined end 66 of the rotary shaft 67 and then the bolts 57 are tightened. Likewise, the guide member 62 is suitably positioned relative to the plate 59 so that the splined end 66 of the rotary shaft 67 extends through a hole (not shown) in a surface of the guide member 62 which abuts against the plate 59. This hole is centrally located and serves to ensure that the splined end 66 is located centrally of the guide member 62. With the above described parts correctly positioned, the bolts 57 and 61 are tightened to lock the guide member 62, the plate 59 and the frame 50 against relative movement. Thereafter, no further adjustment of these parts is necessary whilst mounted on the attachment.

In use, when a driver of the tractor which is to use the attachment, he backs the tractor towards the attachment with the linkage in a lowered position. Whilst backing the tractor up to the attachment, he ensures that the rectangular sleeve 17 is roughly aligned with the inwardly tapering end 64 of the guide member 62 in the lateral direction. At the same time he operates the tractor hydraulics to adjust the vertical position of the rectangular sleeve 17 so that it corresponds to the vertical position of the guide member 62. Further backing of the tractor is effected to engage the rectangular sleeve 17 with the guide member 62. The previously-mentioned permitted limited tilting movement of the sleeve 17 allows the latter to align itself automatically with the guide member 62 so that these two parts can be mutually engaged without jamming through inadvertent misalignment. If necessary, further adjustment of the tractor hydraulics can be effected to ensure proper engagement of the sleeve 17 around the guide member 62. The driver can then back the tractor completely against the attachment so that the frame 10 passes between the side flanges 54 and abuts against the vertical legs 52. This action may involve having to lower the three point linkage. Once engagement has fully occurred, the driver can then operate the tractor hydraulics further in order to raise the three point linkage until the cross-bar 12 engages under the cross-bar 51 and until the lower ends of the legs 52 engage in the upwardly opening recesses defined by the brackets 32. In this respect, it will be seen that reinforcing blocks 69 are provided at the lower ends of the legs 52 to assist in taking the load. Further upward movement of the three point linkage causes the whole of the attachment-mounted hitch part to be lifted so that the attachment can now be drawn by the tractor.

Because of the tapering end 64 of the guide member 62 and the flared side walls 18 of the rectangular sleeve 17, engagement of these parts is relatively easy.

Furthermore, the frusto-conical sleeve 19 facilitates proper engagement of the splined end 66 of the rotary shaft 67 on the attachment with the splined socket 16. It will be appreciated that, as the three-point linkage is raised to its uppermost position, the rectangular sleeve 17 and the rotary coupling part 14 are free to move in two degrees of freedom within limits relative to the frame 10. There will normally be a universally jointed connection between the rotary coupling part 14 and the PTO shaft of the tractor. The above described hitch may be used in installations where a clutch is provided for controlling operation of the attachment from the PTO shaft of the tractor, Such a clutch may be disposed between the PTO shaft of the tractor and the rotary coupling part 14 or between the rotary shaft 67 and another driven shaft of the attachment. Preferably, the clutch is provided between the rotary shaft 67 and the attachment drive shaft.

It will be further appreciated that, when the frame 10 is correctly located relative to the frame 50, the spring loaded pins 33 will be disposed opposite the locating holes 55 and will be urged into engagement therewith by the springs 34, A simple cable-operated retraction mechanism (not shown) is provided for retracting the pins 33 against the action of the springs 34 when it is desired to uncouple the attachment from the tractor.

## Claims

1. A tractor-mountable hitch part and coupling device comprising a member (10) adapted to be mounted on a powered linkage on a tractor which can be raised and lowered, said member (10) being engageable with an attachment-mounted hitch member (50) so as to lift the latter when the powered linkage is raised; a rotary coupling part (14) which is arranged to be driven by a drive shaft of the tractor when the device is mounted on the latter in use, said rotary coupling part (14) being adapted to connect with a corresponding rotary coupling part (67) on the attachment; a support (15) upon which the rotary coupling part (14) is rotatably mounted; means (21 to 30) mounting the support (15) on said member, said mounting means (21 to 30) permitting the support (15) to move freely relative to the member (10) to a limited extent with at least two degrees of freedom; and a guide member (17) associated with the rotary coupling part (14) for engagement with a corresponding guide member (62) on the attachment in order to facilitate mutual engagement of the rotary coupling parts (14 and 67) in use; characterised in that the mounting means (21 to 30) comprises a pair of slide and roller assemblies (23 to 29) which serve to connect the guide member (17) with the member (10), each assembly (23 to 29) being pivotally attached to the guide member (17) and to the member (10) so that one degree of freedom of movement of the guide member (17) and rotary coupling part (14) is permitted by pivoting of the assemblies relative to the members (10 and 17) whilst a second degree of freedom of movement of the guide member (17) and rotary coupling part (14) is permited by relative sliding movement between the slides (24) and the respective rollers (26).

2. A device as claimed in claim 1, wherein the guide member (17) takes the form of a flared member to which the support (15) is secured so that the rotary coupling part (14) is mounted in the flared member.

3. A device as claimed in claim 1 or 2, wherein the slides (24) are pivotally attached to the guide member (17) and the rollers (26) are pivotally supported on the member (10) such that raising and lowering of the guide member (17) and the rotary coupling part (14) is permitted by pivoting of the rollers (26) relative to the member (10) and pivoting of the slides (24) relative to the guide member (17), representing said one degree of freedom; whilst sliding movement of the slides (24) relative to the rollers (26) permits the guide member (17) and rotary coupling part (14) to be moved laterally of the tractor, representing the second degree of freedom.

4. A device as claimed in Claim 1, 2 or 3, wherein the guide member (17) is mounted so as to be tiltable to a limited extent.

5. A device as claimed in any preceding claim, wherein the tractor linkage-mountable member (10) takes the form of a frame having an upper cross bar (12) which is adapted to engage in a correspondingly recessed upper cross bar (51) of the attachment-mounted hitch part (50).

6. An attachment-mountable hitch part and coupling device comprising a hitch member (50) which is adapted to be mounted on the attachment and which is adapted to be engaged and lifted by a tractor linkage-mountable member (10), a guide member (62) for guiding a rotary coupling part (67) on the attachment into engagement with the rotary coupling part (14) of the tractor-mountable device, said guide member (62) being engageable with a guide member (17) of the tractor-mountable device, said guide member (62) also being adjustable in position with two degrees of freedom relative to the hitch member (50); and means (57, 61) for locking the guide member (62) relative to the hitch member (50); characterised in that the attachment-mountable hitch part and coupling device is constructed and adapted to engage with the tractor-mountable hitch part and coupling device as claimed in any preceding claim.

7. A device as claimed in claim 6, wherein the guide member (62) is mounted on a plate (59) having slots (60 and 63) therein to permit movement of the guide member (62) relative to the plate (59) and to receive the rotary coupling part (67) of the attachment; the plate (59) is mounted on the hitch member (50) via slots (56) which extend perpendicularly with respect to the slots (60 and 63) in the plate (59); and the locking means (57, 61) comprises means (61) for locking the guide member (62) against movement relative to the plate (59) and means (57) for locking the plate (59) against movement relative to the hitch member (50).

8. A device as claimed in claim 6 or 7, wherein the hitch member comprises a frame (50) having an upper cross member (51) and a pair of spaced depending legs (54), the arrangement being such that the lower ends of the legs (54) engage against supports (32) on the tractor linkage-mountable member and the cross member (51) also is adapted to engage a corresponding cross member (12) on the tractor linkage-mountable member.

9. A combination of tractor-mountable hitch part and coupling device as claimed in any one of claims 1 to 5 and an attachment-mountable hitch part and coupling device as claimed in any one of claims 6 to 8.

**Patentansprüche**

1. Verbindungsteil und Kupplungsvorrichtung für Schlepper, bestehend aus einem Bauelement (10), das geeignet ist, auf einen motorgetriebenen Anbau an einem Schlepper montiert zu werden, wobei der Anbau angehoben und abgesenkt werden kann, und wobei das Bauelement (10) in ein Verbindungselement für Zusatzgeräte (50) eingreifen kann, um das Verbindungselement anzuheben, wenn der motorgetriebene Anbau angehoben wird; einem rotierenden Kupplungsstück (14), das geeignet ist, durch eine Hinterachswelle des Schleppers angetrieben zu werden, wenn im Gebrauch die Vorrichtung auf den Schlepper montiert ist, wobei das rotierende Kupplungsstück (14) so angeordnet ist, daß es mit einem entsprechenden Kupplungsstück (67) am Zusatzgerät verbunden werden kann; einem Träger (15), auf den das rotierende Kupplungsstück (14) drehbar montiert ist; Mitteln (21 bis 30), um den Träger (15) auf das Bauelement (10) zu montieren, wobei die Montiermittel (21 bis 30) dem Träger (15) gestatten, sich in einem begrenzten Ausmaß relativ zu dem Bauelement (10) mit mindestens zwei Freiheitsgraden frei zu bewegen, sowie einem dem rotierenden Kupplungstück (14) zugehörigen Führungselement (17), das in ein entsprechendes Führungselement (62) an dem Zusatzgerät eingreift, um im Gebrauch das gegenseitige Eingreifen der rotierenden Kupplungsstücke (14, 67) zu vereinfachen, dadurch gekennzeichnet, daß

die Montiermittel (21 bis 30) ein Paar von Schienen- und Rollen-Aufbauten (23 bis 29) umfassen, die dazu dienen, das Führungselement (17) mit dem Bauelement (10) zu verbinden, wobei jeder Aufbau (23 bis 29) mit Drehzapfen an dem Führungselement (17) und an dem Bauelement (10) befestigt ist, so daß ein Bewegungsfreiheitsgrad des Führungselements (17) und des rotierenden Kupplungsstücks (14) durch die Schwenkbewegung der Aufbauten relativ zu den Bauelementen (10, 17) ermöglicht wird, während ein zweiter Bewegungsfreiheitsgrad des Führungselements (17) und des rotierenden Kupplungsstücks (14) durch die relative Gleitbewegung zwischen den Laufschienen (24) und den entsprechenden Laufrollen (26) ermöglicht wird.

2. Vorrichtung nach Anspruch 1, dadurch gekennzeichnet, daß das Führungselement (17) die Form eines konisch erweiterten Elements hat, an dem der Träger (15) so befestigt ist, daß das rotierende Kupplungsstück (14) in dem konisch erweiterten Element montiert ist.

3. Vorrichtung nach Anspruch 1 oder 2, dadurch gekennzeichnet, daß die Laufschienen (24) mit Drehzapfen an dem Führungselement (17) und die Laufrollen (26) mit Drehzapfen an dem Bauelement (10) so gehalten werden, daß ein Anheben beziehungsweise Absenken des Führungselements (17) und des rotierenden Kupplungsstücks (14) durch das Schwenken der Laufrollen (26) d 1 relativ zu dem Bauelement (10) beziehungsweise das Schwenken der Laufschienen (24) relativ zu dem Führungselement (17) ermöglicht wird, was den einen Freiheitsgrad repräsentiert, während die Gleitbewegung der Laufschienen (24) relativ zu den Laufrollen (26) dem Führungselement (17) und dem rotierenden Kupplungsstück (14) gestattet, seitlich zu dem Schlepper bewegt zu werden, was den zweiten Freiheitsgrad repräsentiert.

4. Vorrichtung nach einem der vorhergehenden Ansprüche, dadurch gekennzeichnet, daß das Führungselement (17) so montiert ist, daß es in einem begrenzten Ausmaß schrägstellbar ist.

5. Vorrichtung nach einem der vorhergehenden Ansprüche, dadurch gekennzeichnet, daß das auf den Anbau des Schleppers montierbare Bauelement (10) die Form eines Rahmens hat, der einen oberen Querbalken (12) aufweist, der dazu geeignet ist, in einen entsprechend ausgesparten oberen Querbalken (51) des an dem Zusatzgerät montierten Verbindungsteils (50) einzugreifen.

6. Verbindungsteil und Kupplungsvorrichtung für Zusatzgeräte, bestehend aus einem Verbindungselement (50), das geeignet ist, an das Zusatzgerät montiert zu werden, und das geeignet ist, an ein auf den Anbau des Schleppers montierbares Bauelement (10) angekoppelt und von ihm angehoben zu werden; einem Führungselement (62) zur Führung eines sich auf dem Zusatzgerät befindlichen rotierenden Kupplungsstücks (67) für den Eingriff in das rotierende Kupplungsstück (14) der Vorrichtung für Schlepper, wobei das Führungselement (62) in ein Führungselement (17) der Vorrichtung für Schlepper eingreifen kann und wobei dieses Führungselement (62) ebenso in zwei Freiheitsgraden relativ zu dem Verbindungsteil (50) positionsverstellbar ist; und Mitteln (57, 61), um das Führungselement (62) relativ zu dem Verbindungsteil (50) zu verriegeln, dadurch gekennzeichnet, daß.

das Verbindungsteil und die Kupplungsvorrichtung für Zusatzgeräte so gestaltet und dazu geeignet sind, in das Verbindungsteil und die Kupplungsvorrichtung für Schlepper nach den vorhergehenden Ansprüchen eingreifen zu können.

7. Vorrichtung nach Anspruch 6, dadurch gekennzeichnet, daß das Führungselement (62) auf einer mit Schlitzen (60, 63) versehenen Platte (59) montiert ist, um eine Bewegung des Führungselements (62) relativ zu der Platte (59) zu ermöglichen und um das rotierende Kupplungsstück (67) des Zusatzgeräts aufzunehmen; daß die Platte (59) mit Hilfe von Schlitzen (56), die sich hinsichtlich der Schlitze (60, 63) in der Platte (59) senkrecht ausdehnen, auf dem Verbindungsteil (50) montiert ist und daß die Verriegelungsmittel (57, 61) Mittel (61) zum Verriegeln des Führungselements (62) gegen eine Bewegung relativ zu der Platte (59) und Mittel (57) zum Verriegeln der Platte (59) gegen eine Bewegung relativ zu dem Verbindungsteil (50) umfaßt.

8. Vorrichtung nach Anspruch 6 oder 7, dadurch gekennzeichnet, daß das Verbindungsteil einen Rahmen (50) umfaßt, der einen oberen Querbalken (51) sowie ein Paar mit Abstand angeordnete Schenkel (54) aufweist, wobei der Aufbau so gestaltet ist, daß die unteren Enden der Schenkel (54) an Stützen (32) auf dem an den Anbau des Schleppers montierbaren Bauelement zu liegen kommen, und daß der Querbalken (51) ebenso geeignet ist, an einem entsprechenden Querbalken (12) des auf den Anbau des Schleppers montierbaren Bauelements einzurasten.

9. Kombination eines Verbindungsteils und einer Kupplungsvorrichtung für Schlepper nach den Ansprüchen 1 bis 5 mit einem Verbindungsteil und einer Kupplungsvorrichtung für Zusatzgeräte nach den Ansprüchen 6 bis 8.

**Revendications**

1. Dispositif comprenant une partie d'attelage et d'accouplement pouvant être montée sur un tracteur, comprenant un élément (10) susceptible d'être monté sur un attelage trois points avec prise de force, située sur un tracteur, qui peut être élevé ou abaissé, ledit élément (10) pouvant être accouplé à un élément d'accrochage (50) monté sur un dispositif attelé de façon à le soulever lorsque l'attelage est soulevé; un élément d'accouplement rotatif (14) qui est agencé de façon à être entraîné par un arbre d'entraînement du tracteur lorsque le dispositif est monté sur ce dernier en cours d'utilisation, ledit élément d'accouplement rotatif (14) étant susceptible d'être connecté à un élément d'accouplement rotatif correspondant (67) situé sur le dispositif attelé; un support (15) sur lequel l'élément d'accouplement rotatif (14) est monté de façon à pouvoir tourner; des moyens (21 à 30) de montage du support (15) sur ledit élément, lesdits moyens de montage (21 à 30) permettant au support (15) de se déplacer librement par rapport à l'élément (10) dans une mesure limitée avec au moins deux degrés de liberté; et un élément de guidage (17) associé à l'élément d'accouplement rotatif (14) pour entrer en contact avec un élément de guidage correspondant (62) situé sur le dispositif attelé de façon à faciliter le contact mutuel des éléments d'accouplement rotatifs (14 et 67) en cours d'utilisation, caractérisé en ce que les moyens de montage (21 à 30) comprennent une paire d'ensembles de glissière et galet (23 à 29) servant à connecter l'élément de guidage (17) à l'élément (10), chaque ensemble (23 à 29) étant fixé de façon qu'il puisse pivoter à l'élément de guidage (17) et à l'élément (10) de façon à permettre un premier degré de liberté de mouvement de l'élément de guidage (17) et de l'élément d'accouplement rotatif (14), par pivotement des ensembles par rapport aux éléments (10 et 17), tandis qu'un second degré de liberté de mouvement de l'élément de guidage (17) et de l'élément d'accouplement rotatif (14) est permis par le mouvement de glissement relatif entre les glissières (24) et les galets (26) respectifs.

2. Dispositif selon la revendication 1, caractérisé en ce que l'élément de guidage (17) se présente sous la forme d'un élément évasé auquel le support (15) est fixé, de façon que l'élément d'accouplement rotatif (14) soit monté dans l'élément évasé.

3. Dispositif selon la revendication 1 ou 2, caractérisé en ce que les glissières (24) sont fixées de façon à pouvoir pivoter à l'élément de guidage (17) et les galets (26) sont supportés de façon à pouvoir pivoter sur l'élément (10), de façon à permettre le soulèvement et l'abaissement de l'élément de guidage (17) et de l'élément d'accouplement rotatif (14) par pivotement des galets (26) par rapport à l'élément (10) et pivotement des glissières (24) par rapport à l'élément de guidage (17), ce qui représente ledit premier degré de liberté, tandis que le mouvement de glissement des glissières (24) par rapport aux galets (26) permet à l'élément de guidage (17) et l'élément d'accouplement rotatif (14) à se déplacer latéralement par rapport au tracteur, ce qui représente le second degré de liberté.

4. Dispositif selon la revendication 1, 2 ou 3, caractérisé en ce que l'élément de guidage (17) est monté de façon à pouvoir basculer dans une mesure limitée.

5. Dispositif selon l'une quelconque des revendications précédentes, caractérisé en ce que l'élément (10) pouvant être monté sur l'attelage du tracteur se présente sous la forme d'un cadre comportant une traverse supérieure (12) qui est susceptible d'être reçue dans une traverse supérieure (51), comportant un creux corespondant, de l'élément d'accrochage (50) monté sur le dispositif attelé.

6. Dispositif comprenant une partie d'attelage pouvant être monté sur un dispositif attelé, et d'accouplement, comprenant un élément d'accrochage (50) qui est susceptible d'être monté sur le dispositif attelé et qui est susceptible d'être contacté et soulevé par un élément (10) pouvant être monté sur l'attelage du tracteur, un élément de guidage (62) pour guider un élément d'accouplement rotatif (67) situé sur le dispositif attelé de façon à l'amener en contact de l'élément d'accouplement rotatif (14) du dispositif pouvant être monté sur le tracteur, ledit élément de guidage (62) pouvant entre en contact avec un élément de guidage (17) du dispositif pouvant être monté sur le tracteur, ledit élément de guidage (62) étant également ajustable en position avec deux degrés de liberté par rapport à l'élément d'accrochage (50); et des moyens (57, 61) pour bloquer l'élément de guidage (62) par rapport à l'élément d'accrochage (50), caractérisé en ce que le dispositif comprenant une partie d'attelage pouvant être montée sur le dispositif attelé, et d'accouplement, est réalisé et adapté de façon à entrer en contact avec le dispositif comprenant une partie d'attelage pouvant être montée sur le tracteur, et d'accouplement, selon l'une quelconque des revendications précédentes.

7. Dispositif selon la revendication 6, caractérisé en ce que l'élément de guidage (62) est monté sur une plaque (59) comportant des fentes (60 et 63) pour permettre le déplacement de l'élément de guidage (62) par rapport à la plaque (59) et recevoir l'élément d'accouplement rotatif (67) du dispositif attelé, en ce que la plaque (59) est montée sur l'élément d'accrochage (50) par l'intermédiaire de fentes (56) qui s'étendent perpendiculairement aux fentes (60 et 63) de la plaque (59), et en ce que les moyens de blocage (57, 6i) comprennent des moyens (61) pour bloquer l'élément de guidage (62) en l'empêchant de se déplacer par rapport à la plaque (59) et des moyens (57) pour bloquer la plaque (59) en l'empêchant de se déplacer par rapport à l'élément d'accrochage (50).

8. Dispositif selon la revendication 6 ou 7, caractérisé en ce que l'élément d'accrochage comprend, un cadre (50) comportant une traverse supérieure (51) et deux pieds descendants écartés (54), l'agencement étant tel que les extrémités inférieures des pieds (54) contactent des supports (32) situés sur l'élément pouvant être monté sur l'attelage du tracteur, et la traverse (51) est également susceptible de contacter, une traverse correspondante (12) située sur l'élément, pouvant être monté sur l'attelage du tracteur.

9. Combinaison d'un dispositif comprenant une partie d'attelage pouvant être montée sur un tracteur et constituant un dispositif d'accouplement selon l'une quelconque des revendications 1 à 5, et d'un dispositif comprenant un élément d'accrochage susceptible d'être monté sur un dispositif attelé et constituant un dispositif d'accouplement selon l'une quelconque des revendications 6 à 8.